# EUROPEAN PATENT APPLICATION

(11) **EP 4 822 846 A1**
(43) Date of publication of application: **14.10.2026**
(21) Application number: 25803904.9
(22) Date of filing: 08.04.2025
(51) Int. Cl.: H01M 50/233, H01M 10/658, H01M 50/342, H01M 50/249

(54) **BATTERY MODULE, AND BATTERY PACK AND VEHICLE INCLUDING SAME**

(30) Priority: 13.05.2024 KR 20240062714
(71) Applicant: LG Energy Solution, Ltd., Seoul 07335 (KR)
(72) Inventor: CHANG, Hyuk-Kyun, Daejeon 34122 (KR); MUN, Jeong-O, Daejeon 34122 (KR); KIM, Soo-Youl, Daejeon 34122 (KR)
(74) Representative: BCKIP Part mbB
(86) International application number: PCT/KR2025/004774
(87) International publication number: WO 2025/239546

(57) **Abstract**

A battery module of the present disclosure may include a cell stack in which a plurality of cell modules including at least one battery cell are stacked along a first direction; a module case configured to accommodate the cell stack; and a plurality of cell covers individually covering the plurality of cell modules, wherein the cell cover may be configured to cover at least three surfaces of the cell module.

## Description

### TECHNICAL FIELD

The present disclosure relates to a battery module, and a battery pack and a vehicle including the same.

This application is based on and claims priority from Korean Patent Application No. 10-2024-0062714, filed on May 13, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

Meanwhile, since the battery cells involve chemical reactions during charging and discharging, the performance thereof may deteriorate when used in a higher temperature environment than the appropriate temperature, and there is a constant possibility of unexpected ignition or explosion when the heat is not controlled at the appropriate temperature. Additionally, the battery module is structured to accommodate these battery cells intensively inside the module housing. Therefore, if a thermal event occurs in one battery cell, the discharged high-temperature gas and flame may be transferred to adjacent battery cells, causing a chain reaction of battery cell explosions, which is very dangerous.

Therefore, when thermal runaway occurs in the battery module, there is a need to develop a structure that may prevent heat accumulation inside the battery module by discharging the high-temperature gas or flame generated inside the battery module to the outside, and prevent the discharged gas or flame from flowing back into the battery module.

### DISCLOSURE

### Technical Problem

The present disclosure is designed under the background of the above-described prior art, and the present disclosure is directed to providing a battery module capable of minimizing structural and physical damage caused by cell explosion pressure in the event of thermal runaway of the battery module by using a cell cover including a rigid member.

The present disclosure is also directed to providing a battery module capable of preventing thermal conduction between adjacent cells by using a cell cover including a heat barrier member, which may prevent high-temperature gas and flame discharged during a thermal event occurring in any one battery cell from being transferred to adjacent battery cells and thus causing a chain reaction of battery cell explosions.

Additionally, the present disclosure is directed to providing a battery module with improved safety and reliability by preventing the gas or flame discharged to the outside of the battery module from flowing back into the battery module when thermal runaway occurs in the battery module.

Technical problems to be solved by the present disclosure are not limited to the above-described problems, and other problems not mentioned herein may be clearly understood by those skilled in the art from the following description of the present disclosure.

### Technical Solution

In order to solve the above problem, a battery module of the present disclosure may include a cell stack in which a plurality of cell modules including at least one battery cell are stacked along a first direction; a module case configured to accommodate the cell stack; and a plurality of cell covers individually covering the plurality of cell modules, wherein the cell cover may be configured to cover at least three surfaces of the cell module.

The cell cover may include a rigid member disposed on a side surface of the cell module; and a heat barrier member in which at least a portion thereof is disposed on an outer side of the rigid member and at least a portion thereof covers an upper surface of the cell module.

The heat barrier member may include a heat insulating member and a refractory member disposed on an outer side of the heat insulating member.

The rigid member may include a first rigid member disposed in the first direction of the cell module; and a second rigid member disposed in a second direction opposite to the first direction of the cell module.

The heat insulating member may include a first insulating portion disposed in the first direction of the first rigid member, a second insulating portion disposed in the second direction of the second rigid member, and a third insulating portion connecting the first insulating portion and the second insulating portion and covering the upper direction of the cell module.

The third insulating portion may include at least one first venting portion configured to be breakable when venting gas is discharged from the at least one battery cell.

The refractory member may include a first refractory portion disposed in the first direction of the first insulating portion, a second refractory portion disposed in the second direction of the second insulating portion, and a third refractory portion connecting the first refractory portion and the second refractory portion and covering the upper direction of the cell module.

The third refractory portion may include at least one second venting portion configured to be breakable when venting gas is discharged from the at least one battery cell and formed at a position corresponding to the at least one first cutting line.

The module case may include a top plate covering the upper direction of the cell stack and including at least one venting area.

The battery module may include a top cover covering the upper direction of the module case, wherein the top cover may include at least one third venting portion configured to be breakable when venting gas is discharged from the at least one battery cell.

There may be provided a battery pack including a battery module according to the present disclosure.

And, the present disclosure may provide a vehicle including a battery pack according to the present disclosure.

### Advantageous Effects

According to an embodiment of the present disclosure, the cell cover included in the battery module of the present disclosure may be configured to individually cover the cell module to prevent physical and structural damage caused by external forces, which may provide a battery module capable of preventing movement of high-temperature discharged matter generated from the battery cell or reverse inflow of external discharged matter, and a vehicle including the same.

According to an embodiment of the present disclosure, the cell cover included in the battery module of the present disclosure includes a rigid member and a heat barrier member to minimize structural damage caused by cell explosion pressure, which may provide a battery module that prevents thermal conduction and is resistant to flames, and a vehicle including the same.

According to an embodiment of the present disclosure, at least a portion of the heat barrier member of the cell cover included in the battery module of the present disclosure is configured to cover an upper surface of the battery cell, which may provide a battery module configured to prevent discharged matter such as high-temperature gas, flames, and sparks from moving into a space between the upper surface of the cell and the module case, and a vehicle including the same.

Conventional heat barrier members are disposed side by side between a plurality of cells, making it difficult to assemble them with a module case covering the upper direction even if the height of the heat barrier members is expanded, and in the event of a cell explosion, a gap may occur between the heat barrier members and the module case, or the assembly may be disassembled. In contrast, a plurality of improved cell covers according to the present disclosure are configured to cover at least three surfaces of the cell module, and cover the cell modules individually, so that the possibility of disassembly and damage is low, and the discharged matter may be prevented from moving to the upper end of the cell module.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view showing a battery module according to an embodiment of the present disclosure.
FIG. 2 is an exploded perspective view of a battery module according to an embodiment of the present disclosure.
FIG. 3 is a perspective view showing a battery module with a top plate removed according to an embodiment of the present disclosure.
FIG. 4a is a front view showing a battery module with a top plate removed according to an embodiment of the present disclosure.
FIG. 4b is a front view showing a battery module with a top plate removed according to another embodiment of the present disclosure.
FIG. 5 is a perspective view showing a battery module with at least a portion of a module case removed according to an embodiment of the present disclosure.
FIG. 6 is a cross-sectional view of the battery module of FIG. 5 taken along line A-A' according to an embodiment of the present disclosure.
FIG. 7 is a view showing a battery module including a plurality of cell covers according to an embodiment of the present disclosure as viewed from above.
FIG. 8 is a view schematically showing a heat insulating member and at least one first venting portion formed in the heat insulating member according to an embodiment of the present disclosure.
FIG. 9 is a view schematically showing a refractory member and at least one second venting portion formed in the refractory member according to an embodiment of the present disclosure.
FIG. 10 is a view schematically showing a battery module in which the heat insulating member of FIG. 8 and the refractory member of FIG. 9 are overlapped and disposed according to an embodiment of the present disclosure.
FIG. 11 is a view schematically showing a heat insulating member and at least one first venting portion formed in the heat insulating member according to another embodiment of the present disclosure.
FIG. 12 is a view schematically showing a refractory member and at least one second venting portion formed in the refractory member according to another embodiment of the present disclosure.
FIG. 13 is a view schematically showing a battery module in which the heat insulating member of FIG. 11 and the refractory member of FIG. 12 are overlapped and disposed according to another embodiment of the present disclosure.
FIG. 14 is a cross-sectional view of a battery module according to an embodiment of the present disclosure.
FIG. 15 is a schematic perspective view of a battery pack including a battery module according to an embodiment of the present disclosure.
FIG. 16 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

Meanwhile, terms indicating directions such as upper, lower, left, right, front, and back may be used in the present disclosure, but these terms are only for convenience of description, and it is obvious to those skilled in the art that the terms may vary depending on the position of a reference object or an observer.

For example, in the embodiment of the present disclosure, the X-axis direction illustrated in the drawings may mean a width direction or left-right direction, the Y-axis direction may mean a length direction or front-back direction perpendicular to the X-axis direction on the horizontal plane (X-Y plane), and the Z-axis direction may mean an upper-lower direction (vertical direction) perpendicular to both the X-axis direction and the Y-axis direction.

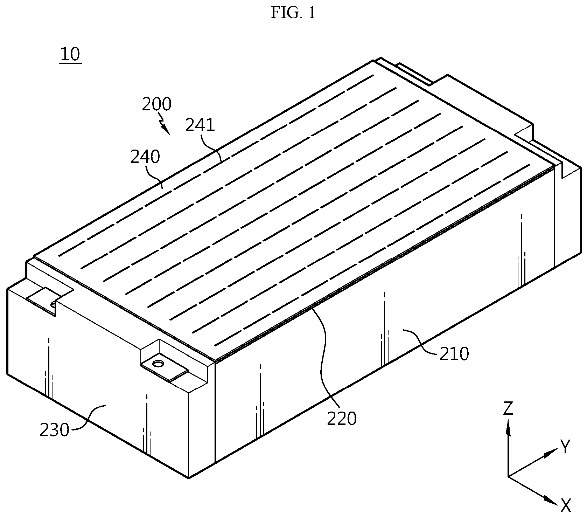

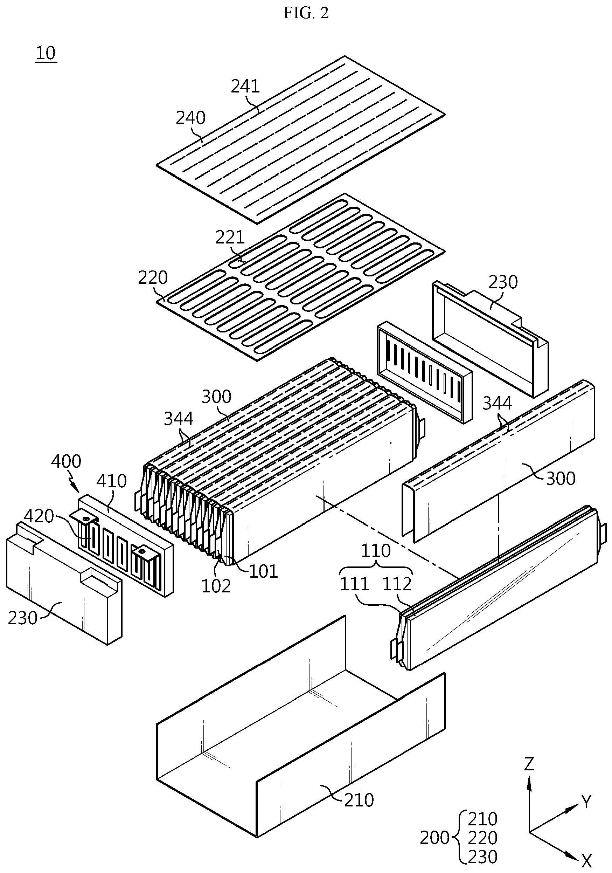

FIG. 1 is a perspective view showing a battery module 10 according to an embodiment of the present disclosure. FIG. 2 is an exploded perspective view of a battery module 10 according to an embodiment of the present disclosure.

Referring to FIGS. 1 and 2, a battery module 10 according to an embodiment of the present disclosure may include a cell stack 100, a module case 200 accommodating the cell stack 100, and a plurality of cell covers 300 configured to cover the cell stack 100.

The cell stack 100 may include at least one battery cell 111, 112. The battery cells 111, 112 may be provided in plurality.

The plurality of battery cells 111, 112 may be, for example, pouch-type secondary batteries. The plurality of battery cells 111, 112 may each be provided with an electrode lead 102. Specifically, the plurality of battery cells 111, 112 may include an electrode assembly, a cell case 101 that accommodates the electrode assembly, and an electrode lead 102 that is connected to the electrode assembly and is withdrawn outward from the cell case 101 to function as an electrode terminal. The cell case 101 may accommodate the electrode assembly in a receiving portion, and an edge around the receiving portion may be thermally fused to form a sealing portion.

The electrode leads 102 may be provided in a pair, and the pair of electrode leads 102 may be withdrawn from both ends of the battery cells 111, 112, that is, in the length direction (e.g., the Y-axis direction in FIG. 2). At this time, the pair of electrode leads 102 may be a positive electrode lead and a negative electrode lead. If necessary, the battery cells 111, 112 may have a form in which the two electrode leads 102 are positioned only at one end in the length direction (e.g., the Y-axis direction in FIG. 2), for example, only at the end in the +Y-axis direction.

As illustrated in FIG. 2 and the like, the plurality of battery cells 111, 112 may be disposed in parallel in a horizontal direction, for example, in the left-right direction (e.g., the X-axis direction in FIG. 2), while being erected in a vertical direction (e.g., the Z-axis direction in FIG. 2). At this time, each battery cell 111, 112 may have its sealing portion facing the front-back direction (e.g., the Y-axis direction in FIG. 2) and the upper-lower direction (e.g., the Z-axis direction in FIG. 2), and its receiving portion facing the left-right direction (e.g., the X-axis direction in FIG. 2).

As illustrated in FIG. 2, the cell stack 100 may include a plurality of cell modules 110 composed of at least a portion of the plurality of battery cells 111, 112 constituting the cell stack 100. In the cell stack 100, a plurality of cell modules 110 including at least one battery cell 111, 112 may be stacked and disposed side by side in a horizontal direction, for example, in the left-right direction (e.g., the X-axis direction in FIG. 2). According to an embodiment, the cell module 110 may include at least one battery cell 111, 112. For example, the cell module 110 may refer to a plurality of adjacent battery cells 111, 112. For example, the cell module 110 may refer to two adjacent battery cells 111, 112. For example, the cell module 110 may refer to three adjacent battery cells 111, 112. For example, the cell module 110 may refer to each of the battery cells 111, 112. That is, the number and/or type of the battery cells 111, 112 constituting the cell module 110 are not limited by the above embodiment, and may be designed in various ways. A plurality of cell modules 110 may be defined as one assembly unit handled when assembling a plurality of battery cells 111, 112 into a module case 200. In other words, a plurality of cell modules 110 may be collected and accommodated in the module case 200.

The present disclosure is not limited by the specific type or shape of the battery cells 111, 112, and various battery cells 111, 112 known at the time of filing of the present disclosure may be employed to form the cell stack 100 of the present disclosure. In the present embodiment, a pouch-type secondary battery with high energy density and easy stacking is targeted as shown in the drawings, but it is obvious that a cylindrical or prismatic secondary battery may be applied as the battery cells 111, 112.

Meanwhile, referring to FIGS. 1 and 2, the module case 200 may be configured to accommodate the cell stack 100. Specifically, the module case 200 may be configured to have an internal space formed therein and accommodate the cell stack 100 in the internal space.

Meanwhile, referring to FIG. 2, the module case 200 may include a case body 210. The case body 210 may be configured to include a metal material having rigidity and heat resistance to physically or chemically protect the accommodated battery cells 111, 112. According to an embodiment, the case body 210 may be provided as a U-frame. When the case body 210 is provided as a U-frame, it may be provided to cover both side surfaces and the lower surface of the cell stack 100. For example, the case body 210 may include a left plate and a right plate that cover one surface facing the left direction (e.g., the -X-axis direction in FIG. 2) and one surface facing the right direction (e.g., the +X-axis direction in FIG. 2) of the cell stack 100, and a lower plate that covers one surface facing the lower direction (e.g., the -Z-axis direction in FIG. 2) of the cell stack 100. And, the left plate, the right plate, and the lower plate may be configured in an integrated form. At this time, the upper direction (e.g., the +Z-axis direction in FIG. 2) and the front-back direction (e.g., the Y-axis direction in FIG. 2) of the case body 210 may be opened. However, the shape and/or structure of the case body 210 are not limited by the above embodiment, and may be designed in various ways.

According to an embodiment, the case body 210 may be provided to allow a plurality of battery cells 111, 112 to be inserted therein along one direction. For example, a plurality of battery cells 111, 112 may be inserted therein along the horizontal direction, for example, the left-right direction (e.g., the X-axis direction in FIG. 2). That is, the case body 210 may be configured such that a plurality of battery cells 111, 112 may be inserted therein in a sliding manner.

According to an embodiment, the module case 200 may further include a top plate 220. The top plate 220 may be provided to form one surface facing the upper direction of the module case 200 (e.g., the +Z-axis direction in FIG. 2). When the case body 210 is configured as a U-frame, the top plate 220 may be coupled in the open upper direction of the case body 210 (e.g., the +Z-axis direction in FIG. 2). The top plate 220 may be coupled to the case body 210 by welding each other. At this time, the coupled shape of the top plate 220 and the case body 210 may be a rectangular tubular shape that is open in the front-back direction (e.g., the Y-axis direction in FIG. 2). However, the top plate 220 may be omitted as necessary. For example, the module case 200 may be provided in an open state in the upper direction (e.g., the +Z-axis direction in FIG. 2). When the module case 200 is in an open state in the upper direction (e.g., the +Z-axis direction in FIG. 2), in the event of thermal runaway occurring within the battery module 10, the gas and/or dust or flame discharged from the battery cells 111, 112 may be discharged in an upward direction through the upper open portion.

Meanwhile, the module case 200 may include an end plate 230 provided in the open front-back direction (e.g., the Y-axis direction in FIG. 2) of the case body 210. The end plate 230 may be coupled to the case body 210 by welding. Meanwhile, although not illustrated for convenience, the end plate 230 may be configured to include an insulating material on the inside and a metal material on the outside, for example. Additionally, the end plate 230 may be partially provided with holes or slits for exposing components that need to be exposed to the outside, such as the positive electrode terminal and negative electrode terminal of the battery module 10 or connectors.

In addition, the module case 200 may be formed in various other shapes. For example, at least one of the components of the module case 200 (e.g., the top plate 220) may be omitted, or one or more other components may be added. For example, the module case 200 may be provided with a box-shaped lower case having an upper open end and an upper cover that closes the upper open end of the lower case. At this time, the lower case may be provided in a form in which, for example, a left plate and a right plate covering both side surfaces of the cell stack 100 and a front plate and a back plate covering the front and back surfaces of the cell stack 100 are all integrated.

Alternatively, the module case 200 may be provided as a mono frame. For example, the case body 210 may be configured in a rectangular tubular shape that has an upper surface, a lower surface, a left surface, and a right surface, and has an open front and back surfaces. According to the module case 200 including this mono frame, the battery module 10 may be assembled by assembling the cell stack 100 and a busbar frame assembly 400 and inserting them into the mono frame along the length direction (e.g., the Y-axis direction in FIG. 2), and then coupling the end plates 230 to both open ends of the mono frame. At this time, in order to prevent the cell stack 100 from moving within the module case 200, there may be almost no gap between the lower surface and upper surface of the case body 210 and the plurality of battery cells 111, 112, and there may also be almost no gap between both side surfaces of the case body 210 and both side portions of the plurality of battery cells 111, 112.

Meanwhile, referring to FIG. 2, the battery module 10 of the present disclosure may further include a busbar frame assembly 400. The busbar frame assembly 400 may be provided inside the module case 200 and configured to cover at least one side of the cell stack 100. In the present embodiment, as illustrated in FIG. 2, the busbar frame assembly 400 may be coupled to the front direction and/or the back direction of the cell stack 100 (e.g., the -Y-axis direction and/or the +Y-axis direction in FIG. 2).

The busbar frame assembly 400 may include a busbar frame 410 and a plurality of busbars 420. The busbar frame 410 may be provided to be coupled approximately to the front direction and/or the back direction of the cell stack 100 (e.g., the -Y-axis direction and/or the +Y-axis direction in FIG. 2). The busbar frame 410 may have slits through which the electrode leads 102 of the battery cells 111, 112 may be withdrawn in the front direction and/or the back direction (e.g., the -Y-axis direction and/or the +Y-axis direction in FIG. 2). Additionally, the busbar frame 410 may be configured to include a material having electrical insulation, such as a plastic material, and may be configured to attach busbars 420 to an outer surface thereof.

Additionally, the busbar frame 410 may be coupled to the cell stack 100 as the electrode leads 102 are coupled to the busbars 420 to be described below.

Meanwhile, the plurality of busbars 420 are means for connecting the plurality of battery cells 111, 112 in series and/or in parallel, and may include a metal material such as copper, aluminum, or nickel, and may be provided in the form of a rod. The electrode leads 102 of the plurality of battery cells 111, 112 may pass through the slits of the busbar frame 410 to be withdrawn outward from the busbar frame 410, and the portions withdrawn in this manner may be attached to the surface of the busbar 420 by welding or the like. When the electrode leads 102 of the battery cells 111, 112 and the busbars 420 are welded in a predetermined pattern at the front and back of the cell stack 100, respectively, the plurality of battery cells 111, 112 may be connected in series and/or in parallel.

In this embodiment, referring to FIG. 2, the module case 200 may have an internal space, thereby accommodating the cell stack 100 and the busbar frame assembly 400 and protecting the cell stack 100 from the outside.

The battery module 10 according to an embodiment of the present disclosure may further include a top cover 240. The top cover 240 may be configured to guide gas and/or discharged matter generated from the battery cells 111, 112 to the outside of the battery module 10 and protect the cell stack 100 from external gas and/or discharged matter.

According to an embodiment, the top cover 240 may be disposed on top of the module case 200. According to an embodiment, the top cover 240 may be coupled to the upper portion of the module case 200. For example, the top cover 240 may be welded and coupled to the upper portion of the module case 200. For example, the top cover 240 may be provided to be bonded to the upper portion of the module case 200 by an adhesive member. For example, the adhesive member may include an adhesive, an adhesive tape, or the like. For example, the top cover 240 may be coupled to the top plate 220. For example, the top cover 240 may be welded and coupled to the top plate 220. For example, when one surface of the module case 200 in the upper direction is open, the top cover 240 may be directly coupled to the case body 210 of the module case 200.

The battery module 10 according to an embodiment of the present disclosure may further include a plurality of cell covers 300. The cell cover 300 covers the cell module 110 including at least one battery cell 111, 112, thereby preventing the high-temperature gas and flame discharged during a thermal event occurring in the battery cells 111, 112 from being transferred to adjacent battery cells 111, 112, causing a chain reaction of the battery cells 111, 112 explosions. Additionally, it is possible to prevent gas and/or discharged matter generated from adjacent battery cells 111, 112 from flowing into the cell cover 300.

The plurality of cell covers 300 may individually cover each of the plurality of cell modules 110. Since one cell cover 300 individually protects one cell module 110, the cell module 110 may be structurally strongly protected when a thermal event occurs in the battery cells 111, 112, and on top of this, the risk of high-temperature gas and flame being transferred may be reduced when a thermal event occurs in adjacent battery cells 111, 112.

According to an embodiment, the cell cover 300 may be configured to cover at least three surfaces of the cell module 110. Referring mainly to FIG. 2, the cell cover 300 may be configured to cover the left surface, the right surface, and the upper surface of the cell module 110. For example, when the electrode leads 102 of the battery cells 111, 112 are disposed at the front and/or back of the cell stack 100, the cell cover 300 may cover both side surfaces and the upper surface of the cell module 110 excluding the front and back. Structural rigidity may be maintained by configuring to cover at least three surfaces of the cell module 110, and even if a thermal event occurs in the battery cells 111, 112, structural and/or physical damage caused by explosion pressure may be reduced. Hereinafter, the configuration and structure of the plurality of cell covers 300 will be described in detail.

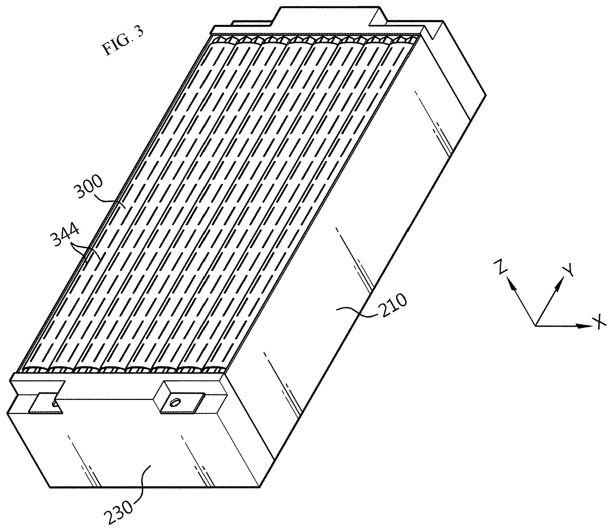

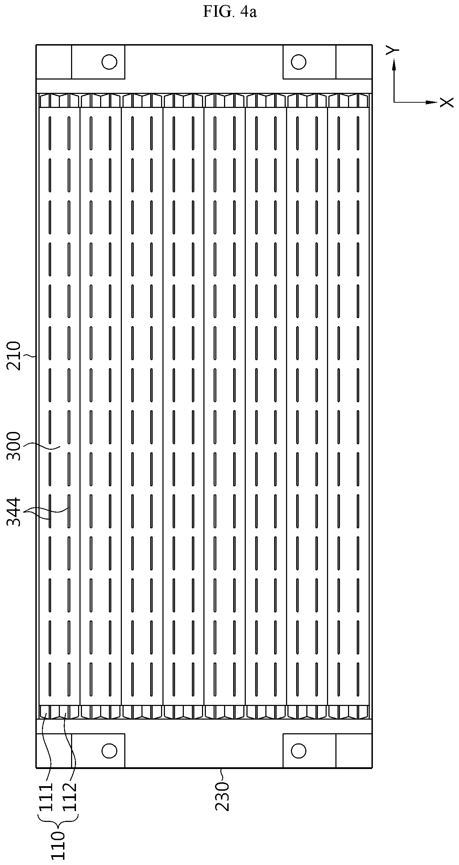

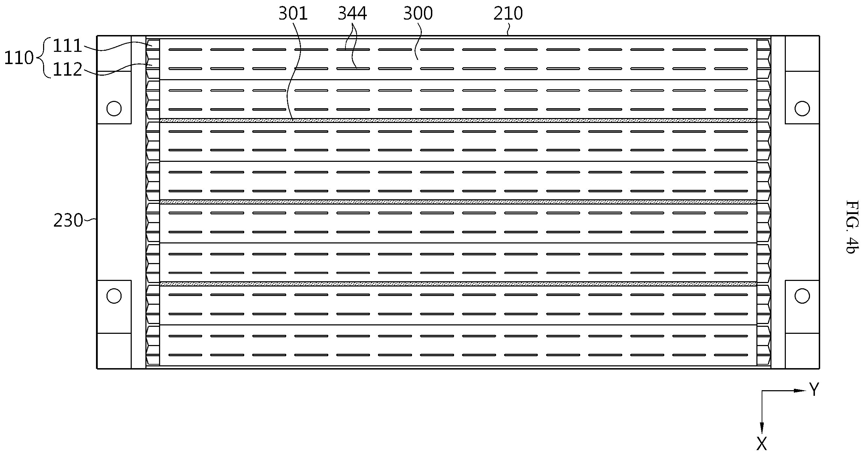

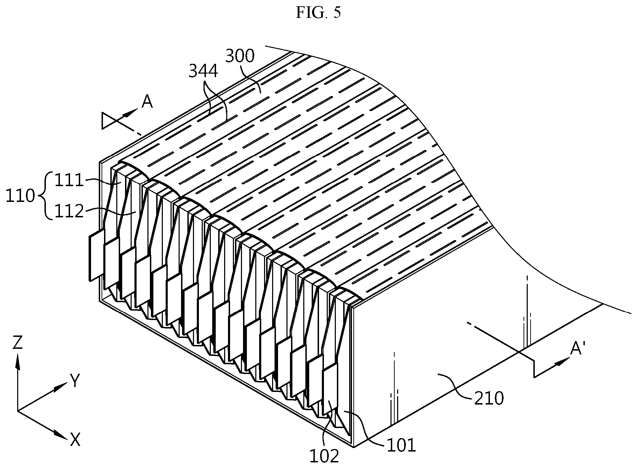

FIG. 3 is a perspective view showing a battery module 10 with a top plate 220 removed according to an embodiment of the present disclosure. FIG. 4a is a front view showing a battery module 10 with a top plate 220 removed according to an embodiment of the present disclosure. FIG. 4b is a front view showing a battery module 10 with a top plate 220 removed according to another embodiment of the present disclosure. FIG. 5 is a perspective view showing a battery module 10 with at least a portion of a module case removed according to an embodiment of the present disclosure.

Referring to FIGS. 3 to 5, a battery module 10 according to an embodiment of the present disclosure may include a cell stack 100, a module case 200 accommodating the cell stack 100, and a plurality of cell covers 300 configured to cover the cell stack 100. The configuration of the cell stack 100, the module case 200, and the plurality of cell covers 300 of FIGS. 3 to 5 may be the same as all or part of the configuration of the cell stack 100, the module case 200, and the plurality of cell covers 300 of FIGS. 1 and 2. The embodiment of FIGS. 3 to 5 may be partially combined with the embodiment of FIGS. 1 and 2.

The plurality of cell covers 300 may be stacked and disposed in the horizontal direction, for example, the left-right direction (e.g., the X-axis direction in FIG. 3). For example, the plurality of cell covers 300 may be disposed side by side corresponding to a plurality of cell modules 110. The plurality of cell covers 300 may be formed to extend in the front-back direction (e.g., the Y-axis direction in FIG. 3). For example, the plurality of cell covers 300 may have a shape that extends in the front-back direction (e.g., the Y-axis direction in FIG. 3) corresponding to the shape of the plurality of cell modules 110. Therefore, most areas excluding the ends of the plurality of battery cells 111, 112 may be covered by the plurality of cell covers 300 and may not be exposed to the outside.

The cell cover 300 may be configured to cover at least three surfaces of the cell module 110. For example, the cell cover 300 may have a '⊏' shape that is open in a downward direction. Referring mainly to FIG. 2, the cell cover 300 may be configured to cover the left surface, the right surface, and the upper surface of the cell module 110. For example, when the electrode leads 102 of the battery cells 111, 112 are disposed at the front and/or back of the cell stack 100, the cell cover 300 may cover both side surfaces and the upper surface of the cell module 110 excluding the front and back. For example, the plurality of cell covers 300 may be disposed to cover each of the plurality of cell modules 110 and then accommodated in the module case 200. For example, each cell cover 300 may be disposed on top of each cell module 110 in a state where a plurality of cell modules 110 are stacked.

Referring to FIG. 4b, the battery module 10 may further include a blocking member 301. The blocking member 301 may be provided between a plurality of battery cells 111, 112. In particular, a plurality of blocking members 301 may be included in one cell stack 100. The blocking member 301 may be provided to be disposed for at least one battery cell 111, 112. In the present embodiment, the blocking member 301 may be disposed for every two cell modules 110. The blocking member 301 may be formed to extend in the front-back direction (Y-axis direction) in a vertically upright state, and may be disposed side by side in the left-right direction (X-axis direction). According to the above embodiment of the present disclosure, the plurality of battery cells 111, 112 may be partitioned or separated by the blocking member 301 to prevent gas or flame from being transferred to other blocking members 301 adjacent to the blocking member 301.

This blocking member 301 may be made of a material having excellent heat resistance and/or fire resistance, for example, a material such as silicone or aerogel. According to the above embodiment of the present disclosure, the blocking member 301 may contribute to the structural rigidity of the battery cells 111, 112 by compressing the battery cells 111, 112 in the event of swelling phenomenon of the battery cells 111, 112. However, the blocking member may be omitted as necessary.

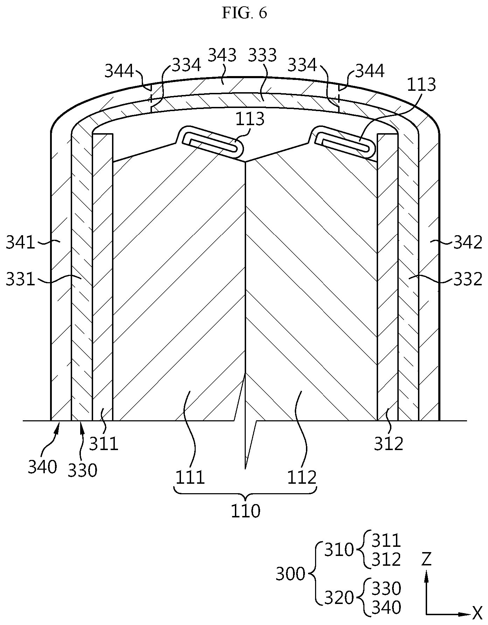

FIG. 6 is a cross-sectional view of the battery module 10 of FIG. 5 taken along line A-A' according to an embodiment of the present disclosure.

Referring to FIG. 6, a battery module 10 according to an embodiment of the present disclosure may include a cell stack 100, a module case 200 accommodating the cell stack 100, and a plurality of cell covers 300 configured to cover the cell stack 100. The configuration of the cell stack 100, the module case 200, and the plurality of cell covers 300 of FIG. 6 may be the same as all or part of the configuration of the cell stack 100, the module case 200, and the plurality of cell covers 300 of FIGS. 3 to 5. The embodiment of FIG. 6 may be partially combined with the embodiment of FIGS. 3 to 5.

According to an embodiment, the cell cover 300 may include a rigid member 310 and a heat barrier member 320.

The rigid member 310 may be disposed on a side surface of the cell module 110. For example, the rigid member 310 may include a first rigid member 311 disposed in the first direction (e.g., the left direction, the -X-axis direction in FIG. 6) of the cell module 110 and a second rigid member 312 disposed in the second direction (e.g., the right direction, the +X-axis direction in FIG. 6) of the cell module 110.

The rigid members 310 may be disposed on both side surfaces of the cell module 110 to prevent structural and/or physical damage caused by explosive pressure of the battery cells 111, 112 when thermal runaway of the battery module 10 occurs. When structural and/or physical damage occurs to the cell cover 300, high-temperature gas and flame may not be prevented from being transferred to adjacent battery cells 111, 112 or adjacent battery modules, causing a chain reaction of explosions of the battery cells 111, 112 or battery module 10. However, in the case of the present disclosure, by using the cell cover 300 including the rigid member 310, physical damage may not occur even by high-temperature gas or explosive pressure.

The rigid member 310 may include a material having high thermal conductivity. For example, the rigid member 310 may be configured to conduct and/or disperse heat in a plane direction (e.g., X-axis direction) by using a material having high thermal conductivity. By dispersing heat through the rigid member 310, the temperature difference between the battery cells 111, 112 in which a thermal event occurs and the adjacent battery cells 111, 112 may be reduced. That is, by dispersing heat through the rigid member 310, localized heat accumulation may be prevented. Additionally, the rigid member 310 may include an insulating material.

The rigid member 310 may be formed to be upright in the vertical direction (Z-axis direction) and extend in the front-back direction (Y-axis direction). For example, the rigid member 310 may be composed of a single sheet having a rectangular shape. For example, the rigid member 310 may include stainless steel (e.g., SUS). However, the material of the rigid member 310 is not limited by the above embodiment and may be designed in various ways.

The rigid member 310 may have a relatively high melting point compared to other components. For example, the rigid member 310 may have a melting point of 1000 degrees or higher. For example, the rigid member 310 may have a melting point of 1400 degrees or higher. A rigid member 310 having a relatively high melting point may be used to prevent melting due to cell ignition even if a thermal event occurs in the battery cells 111. When a thermal event occurs in the battery cells 111, 112, the rigid member 310 may be configured to disperse heat without melting, thereby preventing the heat barrier member 320 in contact with the rigid member 310 from being exposed to flame and maintaining the heat barrier performance.

According to an embodiment, the heat barrier member 320 may prevent high-temperature gas and flame from being transferred to adjacent battery cells 111, 112 disposed outside the cell cover 300 when the battery cells 111, 112 disposed within the cell cover 300 undergo thermal runaway. Additionally, the heat barrier member 320 may prevent high-temperature gas and flame generated outside the cell cover 300 from being transferred into the cell cover 300 when adjacent battery cells 111, 112 undergo thermal runaway. Additionally, the heat barrier member 320 may prevent gas or flame discharged to the outside of the cell cover 300 from flowing back into the cell cover 300, thereby improving safety and reliability.

According to an embodiment, at least a portion of the heat barrier member 320 is disposed on an outer side of the rigid member 310, and at least a portion thereof may cover the upper surface of the cell module 110. In other words, the heat barrier member 320 may be configured to cover both the side surface and the upper surface of the cell module 110. According to an embodiment, the heat barrier member 320 may include a heat insulating member 330 and a refractory member 340 disposed on an outer side of the heat insulating member 330. In other words, the cell cover 300 may be sequentially disposed in the order of a rigid member 310, a heat insulating member 330, and a refractory member 340 in an outward direction (e.g., the X-axis direction or the +X-axis direction) from the cell module 110.

According to an embodiment, the heat insulating member 330 may include a first insulating portion 331 disposed in the first direction (e.g., the left direction, the -X-axis direction in FIG. 6) of the first rigid member 311, a second insulating portion 332 disposed in the second direction (e.g., the right direction, the +X-axis direction in FIG. 6) of the second rigid member 312, and a third insulating portion 333 connecting the first insulating portion 331 and the second insulating portion 332 and covering the upper direction of the cell module 110.

According to an embodiment, the first insulating portion 331 and the second insulating portion 332 may be disposed between the rigid member 310 and the refractory member 340. The first insulating portion 331 and the second insulating portion 332 may be disposed upright in the vertical direction (Z-axis direction). The first insulating portion 331 and the second insulating portion 332 are disposed next to the rigid member 310. Therefore, when a thermal event occurs in the battery cells 111, 112, heat is primarily dispersed by the rigid member 310, and the dispersed heat is insulated by the first insulating portion 331 and the second insulating portion 332, thereby improving insulation performance.

According to an embodiment, the third insulating portion 333 may be disposed between the double side folding portion (DSF) 113 disposed in the upper direction of the battery cells 111, 112 and the top plate 220. Here, the double side folding portion (DSF) 113 of the battery cells 111, 112 may be defined as a portion configured to seal by folding an upper edge portion twice in a pouch-type battery. For example, the distance between the double side folding portion (DSF) 113 and the top plate 220 may be approximately 2.7 mm. High-temperature gas or flame generated inside the battery module 10 may be transferred to an adjacent cell through the space between the double side folding portion (DSF) 113 and the top plate 220, but according to the present disclosure, the third insulation portion 333 may be configured to cover the space between the double side folding portion (DSF) 113 and the top plate 220, thereby preventing high-temperature gas or flame generated inside the battery module 10 from being transferred to an adjacent cell through the space between the double side folding portion (DSF) 113 and the top plate 220.

The heat insulating member 330 may include, for example, a material such as a polyurethane board, a polyisocyanurate board, a polystyrene board, a high-temperature refractory fiber, a silicone-based foam, a high-density polyurethane (e.g., high-performance insulation; HPI), or silicon (Si).

In an embodiment, the refractory member 340 may be resistant to high temperature, non-combustible, and capable of isolating heat and flame in the event of a fire. The refractory member 340 may have a shape substantially similar to the heat insulating member 330. The refractory member 340 may include a first refractory portion 341 disposed in the first direction of the first insulating portion 331, a second refractory portion 342 disposed in the second direction of the second insulating portion 330, and a third refractory portion 343 connecting the first refractory portion 341 and the second refractory portion 342 and covering the upper direction of the cell module 110.

For example, the refractory member 340 may include limestone, silicate, and silicon, and the refractory member 340 may include a material such as a refractory fiber board, a refractory clay board (e.g., fire-retardant board; FRB), mica, and the like.

According to an embodiment, the third insulating portion 333 may include at least one first venting portion 334 configured to be breakable when venting gas is discharged from at least one battery cell 111, 112. According to an embodiment, the third refractory portion 343 may include at least one second venting portion 344 configured to be breakable when venting gas is discharged from the at least one battery cell 111, 112. The shape and/or structure of the at least one first venting portion 334 and the at least one second venting portion 344 will be described in detail below.

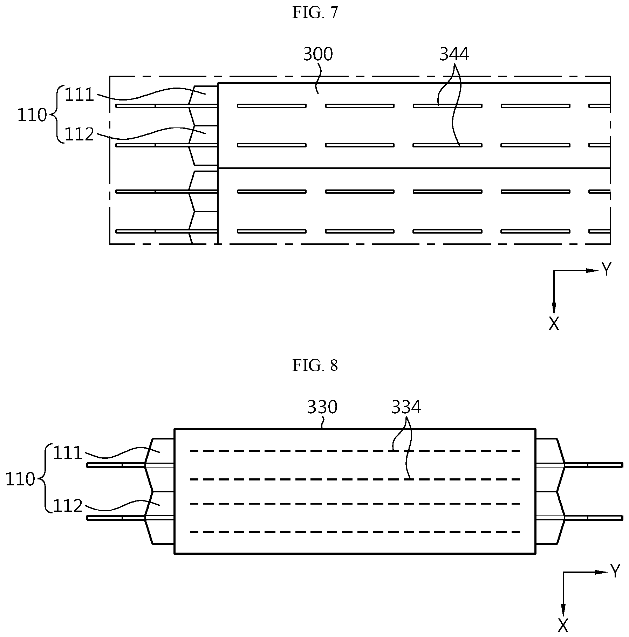

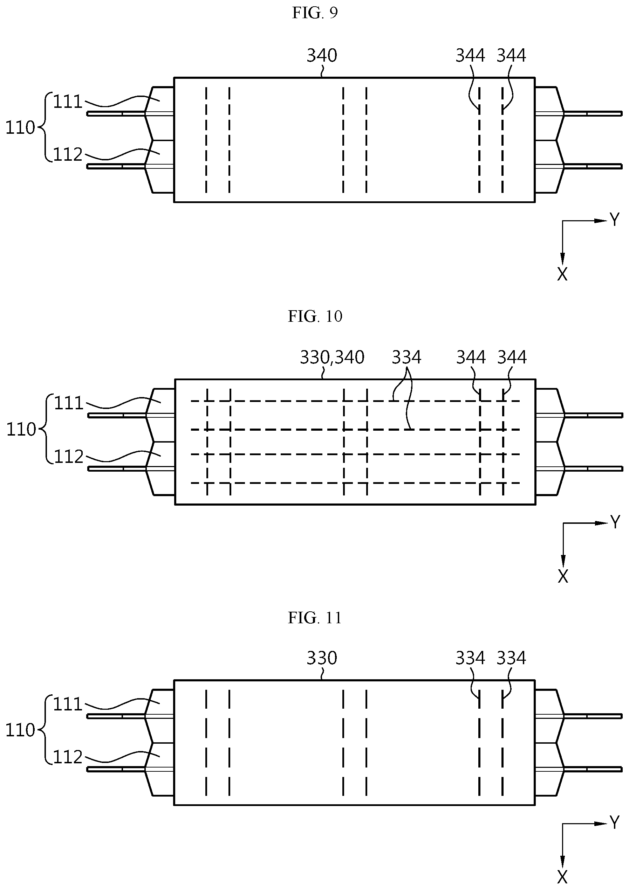

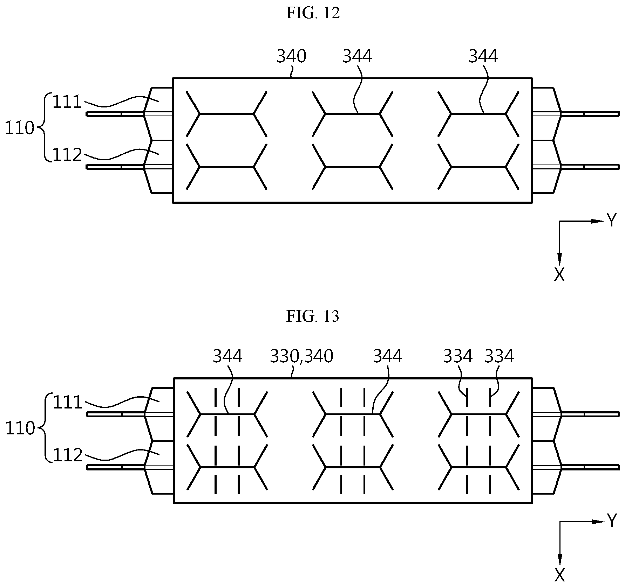

FIG. 7 is a view showing a battery module 10 including a plurality of cell covers 300 according to an embodiment of the present disclosure as viewed from above. FIG. 8 is a view schematically showing a heat insulating member 330 and at least one first venting portion 334 formed in the heat insulating member 330 according to an embodiment of the present disclosure. FIG. 9 is a view schematically showing a refractory member 340 and at least one second venting portion 344 formed in the refractory member 340 according to an embodiment of the present disclosure. FIG. 10 is a view schematically showing a battery module 10 in which the heat insulating member 330 of FIG. 8 and the refractory member 340 of FIG. 9 are overlapped and disposed according to an embodiment of the present disclosure. FIG. 11 is a view schematically showing a heat insulating member 330 and at least one first venting portion 334 formed in the heat insulating member 330 according to another embodiment of the present disclosure. FIG. 12 is a view schematically showing a refractory member 340 and at least one second venting portion 344 formed in the refractory member 340 according to another embodiment of the present disclosure. FIG. 13 is a view schematically showing a battery module 10 in which the heat insulating member 330 of FIG. 11 and the refractory member 340 of FIG. 12 are overlapped and disposed according to another embodiment of the present disclosure.

Referring to FIGS. 7 to 13, a battery module 10 according to an embodiment of the present disclosure may include a cell stack 100, a module case 200 accommodating the cell stack 100, and a plurality of cell covers 300 configured to cover the cell stack 100. The configuration of the cell stack 100, the module case 200, and the plurality of cell covers 300 of FIGS. 7 to 13 may be the same as all or part of the configuration of the cell stack 100, the module case 200, and the plurality of cell covers 300 of FIG. 6. The embodiment of FIGS. 7 to 13 may be partially combined with the embodiment of FIG. 6.

According to an embodiment, at least one first venting portion 334 may be formed in the third insulating portion 333 disposed in the upper direction from the heat insulating member 330. According to an embodiment, at least one second venting portion 344 may be formed in the third refractory portion 343 disposed in the upper direction from the refractory member 340.

At least one first venting portion 334 and/or at least one second venting portion 344 are positioned in the upper direction of the battery cells 111, 112, and thus may be provided to be easily broken by the pressure of venting gas when the venting gas is discharged from the battery cells 111, 112. In other words, at least one first venting portion 334 and/or at least one second venting portion 344 may not be deformed by high heat such as dust or flame, but may be configured to be broken by the high pressure of the venting gas.

At least one first venting portion 334 and/or at least one second venting portion 344 may include a cutting line through which gas or the like generated in the cell module 110 surrounded by the cell cover 300 may be discharged. At least one first venting portion 334 and/or at least one second venting portion 344 may be configured to be thinner or have a lower density than the surrounding area, thereby being easily breakable compared to the surrounding area. At least one first venting portion 334 and/or at least one second venting portion 344 may have a groove formed according to the shape of the cutting line, and may be provided as a dashed line or a solid line.

The shape of at least one first venting portion 334 and/or at least one second venting portion 344 may be formed in various ways. For example, referring to FIG. 7, at least one first venting portion 334 formed in the third insulating member 330 may include a plurality of cutting lines extending in the length direction (Y-axis direction) and spaced apart from each other. The plurality of cutting lines extending in the length direction (Y-axis direction) and spaced apart from each other may be formed in plurality in the left-right direction (X-axis direction). For example, referring to FIG. 8, at least one first venting portion 334 formed in the third insulating member 330 substantially similarly to FIG. 7 may include a plurality of cutting lines extending in the length direction (Y-axis direction) and spaced apart from each other. The size and length of the plurality of cutting lines may be designed in various ways, and may be in a shape where short cutting lines are densely arranged in a straight line. The more densely arranged the shape is, the easier it may be broken by venting pressure. For example, referring to FIG. 9, at least one second venting portion 344 formed in the third refractory member 340 may include a plurality of cutting lines extending in the left-right direction (X-axis direction) and arranged in a straight line in the left-right direction (X-axis direction). The plurality of cutting lines may be disposed to be spaced apart from each other in the length direction (Y-axis direction). For example, the positions where the plurality of cutting lines are formed may be formed at positions corresponding to the plurality of venting areas 221 of the top plate 220 based on the length direction (Y-axis direction). For example, referring to FIG. 10, when the third insulating member 330 according to FIG. 8 and the third refractory member 340 according to FIG. 9 are combined and disposed, at least one first venting portion 334 and at least one second venting portion 344 may be disposed to vertically intersect.

For example, referring to FIG. 11, at least one first venting portion 334 formed in the third insulating member 330 may include a plurality of cutting lines extending in the left-right direction (X-axis direction) and arranged in a straight line in the left-right direction (X-axis direction). The plurality of cutting lines may be disposed to be spaced apart from each other in the length direction (Y-axis direction). For example, the positions where the plurality of cutting lines are formed may be formed at positions corresponding to the plurality of venting areas 221 of the top plate 220 based on the length direction (Y-axis direction). For example, the plurality of cutting lines of FIG. 11 may be formed to have a relatively larger size compared to the plurality of cutting lines of FIG. 9. For example, referring to FIG. 12, at least one second venting portion 344 formed in the third refractory member 340 may include cutting lines that extend in the length direction (Y-axis direction) and have a plurality of diagonal portions extending diagonally at both ends. The cutting lines may be provided in plurality, and may be arranged to be spaced apart from each other in the length direction (Y-axis direction) and/or in the left-right direction (X-axis direction). For example, referring to FIG. 13, when the third insulating member 330 according to FIG. 11 and the third refractory member 340 according to FIG. 12 are combined and disposed, at least one first venting portion 334 and at least one second venting portion 344 may be disposed to at least partially overlap. In this way, the shapes of at least one first venting portion 334 and at least one second venting portion 344 may be different from each other. When at least one first venting portion 334 and at least one second venting portion 344 having different shapes are disposed, the venting gas discharged from the battery cells 111, 112 may be moved and discharged in various directions, thereby setting various discharge paths and simultaneously dispersing heat. However, the shapes of at least one first venting portion 334 and at least one second venting portion 344 are not limited by the above embodiment, and may be designed in various ways as necessary. Additionally, at least one first venting portion 334 formed in the third insulating member 330 described in FIGS. 7 to 13 may be applicable to at least one second venting portion 344 formed in the third refractory member 340, and at least one second venting portion 344 formed in the third refractory member 340 may be applicable to at least one first venting portion 334 formed in the third insulating member 330.

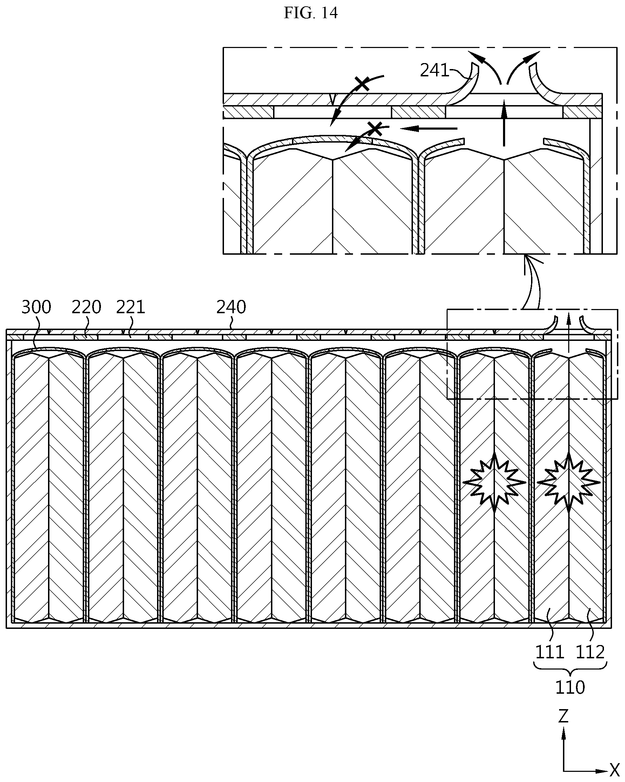

FIG. 14 is a cross-sectional view of a battery module 10 according to an embodiment of the present disclosure.

Referring to FIG. 14, a battery module 10 according to an embodiment of the present disclosure may include a cell stack 100, a module case 200 accommodating the cell stack 100, and a plurality of cell covers 300 configured to cover the cell stack 100. The configuration of the cell stack 100, the module case 200, and the plurality of cell covers 300 of FIG. 14 may be the same as all or part of the configuration of the cell stack 100, the module case 200, and the plurality of cell covers 300 of FIGS. 7 to 13. The embodiment of FIG. 14 may be partially combined with the embodiment of FIGS. 7 to 13.

As illustrated in FIGS. 2 and 14, the top plate 220 may include at least one venting area 221. The at least one venting area 221 may be configured to discharge venting gas generated in the battery cells 111, 112 to the outside of the module case 200. For example, when a flame is generated in the battery cells 111, 112, at least one first venting portion 334 and/or at least one second venting portion 344 of the cell cover 300 covering the battery cells 111, 112 are broken, so that the flame may be discharged to the outside of the cell cover 300, and may be discharged to the outside of the module case through at least one venting area 221 in the top plate 220.

In the top plate 220, at least one venting area 221 may be formed to correspond to the position of at least one first venting portion 334 or at least one second venting portion 344 of the cell cover 300. That is, the top plate 220 may induce directional venting toward the upper direction (e.g., the +Z-axis direction in FIG. 4a) of the battery module 10 through at least one venting area 221. For example, at least one venting area may be a venting hole. For example, at least one venting area may be a break line or a preliminary cutting line configured to be broken by explosion pressure.

As illustrated in FIGS. 2 and 14, the top cover 240 may include at least one third venting portion 241 configured to be breakable when venting gas is discharged from at least one battery cell 111, 112. The at least one third venting portion 241 may be configured to discharge venting gas generated from the battery cells 111, 112 to the outside of the battery module 10. For example, when a flame occurs in the battery cells 111, 112, at least one first venting portion 334 and/or at least one second venting portion 344 of the cell cover 300 covering the battery cells 111, 112 are broken, so that the flame may be discharged to the outside of the cell cover 300, and the flame discharged to the outside of the cell cover 300 may be discharged to the outside of the module case through at least one venting area 221 of the top plate 220, and the flame discharged to the outside of the module case may be discharged to the outside of the battery module 10 through the broken cutting line of at least one third venting portion 241 of the top cover 240.

According to an embodiment, at least one third venting portion 241 may be formed at a position corresponding to at least one first venting portion 334 and/or at least one second venting portion 344 and/or at least one venting area 221. At least one third venting portion 241 may be configured to be easily broken by the pressure of venting gas when the venting gas is discharged from the battery cells 111, 112. In other words, at least one third venting portion 241 may not be deformed by high heat such as dust or flame, but may be configured to be broken by the high pressure of the venting gas. At least one third venting portion 241 may include a cutting line through which gas or the like generated in the cell module 110 surrounded by the cell cover 300 may be discharged. At least one third venting portion 241 may be configured to be thinner or have a lower density than the surrounding area, thereby being easily breakable compared to the surrounding area. At least one third venting portion 241 may have a groove formed according to the shape of the cutting line, and may be provided as a dashed line or a solid line.

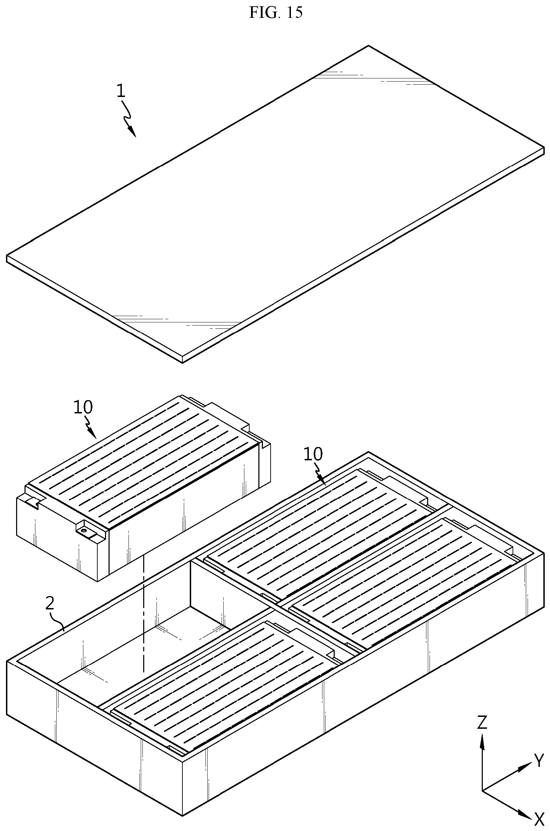

FIG. 15 is a schematic perspective view of a battery pack including a battery module 10 according to an embodiment of the present disclosure.

Referring to FIG. 15, a battery pack 1 according to an embodiment of the present disclosure may include one or more battery modules 10 according to an embodiment of the present disclosure as described above. The battery pack 1 according to the present disclosure may further include a battery management system (BMS) for integrated control of charging and discharging of one or more battery modules, a current sensor, a fuse, and the like, and a pack case 2 for accommodating the above-described components.

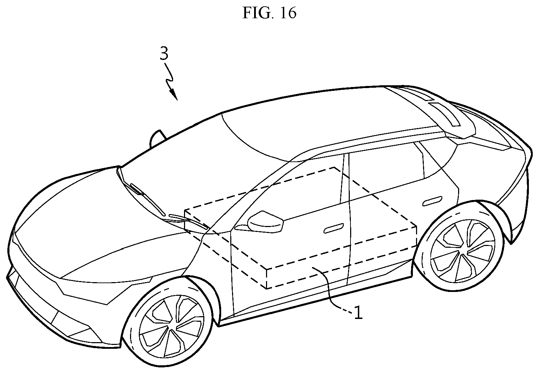

FIG. 16 is a schematic perspective view of a vehicle including a battery pack according to an embodiment of the present disclosure.

Referring to FIG. 16, a vehicle 3 according to an embodiment of the present disclosure may include one or more battery packs 1 according to an embodiment of the present disclosure or one or more battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheeled vehicle and a two-wheeled vehicle. The vehicle 3 operates by receiving power from the battery pack 1 or the battery module 10 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery module comprising:
a cell stack in which a plurality of cell modules comprising at least one battery cell are stacked along a first direction;
a module case configured to accommodate the cell stack; and
a plurality of cell covers individually covering the plurality of cell modules,
wherein the cell cover is configured to cover at least three surfaces of the cell module.

2. The battery module according to claim 1,
wherein the cell cover comprises:
a rigid member disposed on a side surface of the cell module; and
a heat barrier member in which at least a portion thereof is disposed on an outer side of the rigid member and at least a portion thereof covers an upper surface of the cell module.

3. The battery module according to claim 2,
wherein the heat barrier member comprises a heat insulating member and a refractory member disposed on an outer side of the heat insulating member.

4. The battery module according to claim 3,
wherein the rigid member comprises a first rigid member disposed in the first direction of the cell module; and a second rigid member disposed in a second direction opposite to the first direction of the cell module.

5. The battery module according to claim 4,
wherein the heat insulating member comprises a first insulating portion disposed in the first direction of the first rigid member, a second insulating portion disposed in the second direction of the second rigid member, and a third insulating portion connecting the first insulating portion and the second insulating portion and covering the upper direction of the cell module.

6. The battery module according to claim 5,
wherein the third insulating portion comprises at least one first venting portion configured to be breakable when venting gas is discharged from the at least one battery cell.

7. The battery module according to claim 5,
wherein the refractory member comprises a first refractory portion disposed in the first direction of the first insulating portion, a second refractory portion disposed in the second direction of the second insulating portion, and a third refractory portion connecting the first refractory portion and the second refractory portion and covering the upper direction of the cell module.

8. The battery module according to claim 7,
wherein the third refractory portion comprises at least one second venting portion configured to be breakable when venting gas is discharged from the at least one battery cell.

9. The battery module according to claim 1,
wherein the module case comprises a top plate covering the upper direction of the cell stack and comprising at least one venting area.

10. The battery module according to claim 1, comprising:
a top cover covering the upper direction of the module case,
wherein the top cover comprises at least one third venting portion configured to be breakable when venting gas is discharged from the at least one battery cell.

11. A battery pack comprising a battery module according to any one of claims 1 to 10.

12. A vehicle comprising a battery pack according to claim 11.
